(19) **Europäisches Patentamt**

**European Patent Office**

**Office européen des brevets**

(11) **EP 0 522 643 B1**

(12) **EUROPEAN PATENT SPECIFICATION**

(45) Date of publication and mention
of the grant of the patent:
**02.05.1997   Bulletin 1997/18**

(51) Int Cl.6: **C08G 67/02**

(21) Application number: **92202019.3**

(22) Date of filing: **02.07.1992**

(54) **Method for preparing polymers of carbon monoxide and unsaturated compounds**

Verfahren zur Herstellung von Polymeren aus Kohlenmonoxid und ungesättigten Verbindungen

Méthode de préparation de polymères de monoxyde de carbone et de composés insaturés

(84) Designated Contracting States:
**BE CH DE ES FR GB IT LI NL**

(30) Priority: **08.07.1991   NL 9101189**

(43) Date of publication of application:
**13.01.1993   Bulletin 1993/02**

(73) Proprietor: **SHELL INTERNATIONALE
RESEARCH MAATSCHAPPIJ B.V.
2596 HR Den Haag (NL)**

(72) Inventor: **Drent, Eit
NL-1031 CM Amsterdam (NL)**

(56) References cited:
**EP-A- 0 228 733**

## Description

The invention relates to a process for the preparation of polymers of carbon monoxide with one or more α-olefins.

Linear polymers of carbon monoxide with ethene and/or propene and optionally in addition with one or more other α-olefins in which polymers the units from carbon monoxide on the one hand and the units from the olefins on the other hand are present in a substantially alternating arrangement can be prepared by contacting the monomers with a catalyst composition containing a Group VIII metal and a phosphorus bidentate ligand of the general formula $R_1R_2P\text{-}R\text{-}PR_3R_4$ in which $R_1$ to $R_4$ represent identical or different monovalent aromatic or aliphatic hydrocarbon groups and R is a divalent organic bridging group containing at least two carbon atoms in the bridge connecting the two phosphorus atoms to each other. Using these catalyst compositions, linear alternating polymers are obtained with an average molecular weight, calculated as number average ($\overline{M}_n$), of more than 10,000. For some applications there is a need for such polymers with a considerably lower average molecular weight. These polymers can be used as such or can serve as starting material for the preparation of other valuable polymers by chemical modification. By means of chemical reaction, the carbonyl groups present in the polymers as functional groups can be converted at least partly into a variety of other functional groups. This chemical modification changes the properties of the polymers and they become eligible for applications for which the original polymers were unsuitable or less suitable. As examples of chemical reactions which can be performed on the low molecular weight polymers, can be mentioned the conversion to polyalcohols by catalytic hydrogenation, the conversion to polypyrroles by reaction with primary amines or ammonia, the conversion to polyamines or polythiols by catalytic hydrogenation in the presence of ammonia or hydrogen sulphide respectively, the conversion to polyphenols by condensation with phenols and the conversion to polyketals by reaction with alcohols.

The applicant has carried out an investigation into the preparation of the present polymers with a low average molecular weight. Initially, it was tried by means of fractionation to separate a low molecular weight fraction from the material prepared in the conventional manner and having an average molecular weight of more than 10,000. Apart from the fact that this separation method is very time consuming, it produces the desired low molecular weight material in only a very low yield. Carrying out the polymerization at very high temperatures was also rejected as unattractive, since this manner of processing has a very unfavorable influence on the stability of the catalyst composition. It was also investigated in how far the carrying out of the polymerization in the presence of hydrogen could lead to the desired goal. The initial results from the use of catalyst compositions containing a tetraarylbisphosphine as bidentate ligand were disappointing. Although it was possible in this way to achieve some reduction in the average molecular weight, the prepared polymers still possessed a $\overline{M}_n$ which was considerably higher than 10,000. It was, however, found that the presence of hydrogen has a strong lowering effect on the average molecular weight of the prepared polymers if the polymerization is carried out using a catalyst composition containing as bidentate ligand a tetraalkylbisphosphine in which the carbon atoms forming part of the alkyl groups and occurring linked to phosphorus carry at least two hydrogen atoms. In this way polymers can be prepared with a $\overline{M}_n$ of less than 2500.

In the course of continued research by the applicant into this subject it has now been surprisingly found that when using catalyst compositions containing a Group VIII metal and a tetraalkylbisphosphine, the desired polymers with a low molecular weight can also be prepared in the absence of hydrogen. To this end a tetraalkylbisphosphine should be incorporated in the catalyst composition in which the carbon atoms forming part of the alkyl groups and occurring linked to phosphorus carry just one hydrogen atom. By using such catalyst compositions it was possible to prepare polymers in high yield with a $\overline{M}_n$ of less than 2500.

The patent application therefore relates to a process for the preparation of polymers wherein polymers of carbon monoxide with ethene and/or propene and optionally in addition with one or more other α-olefins are prepared by contacting the monomers in the absence of hydrogen with a catalyst composition containing a Group VIII metal and a phosphorus bidentate ligand of the general formula $R_5R_6P\text{-}R\text{-}PR_7R_8$ in which $R_5$ to $R_8$ represent identical or different monovalent aliphatic hydrocarbon groups in which the carbon atoms forming part of the groups $R_5$ to $R_8$ and being linked to phosphorus carry one hydrogen atom and in which R is a divalent organic bridging group containing at least two carbon atoms in the bridge connecting the two phosphorus atoms to each other.

In this patent application, Group VIII metals are understood to be the noble metals ruthenium, rhodium, palladium, osmium, iridium and platinum, as well as the iron group metals iron, cobalt and nickel. In the catalyst compositions the Group VIII metal is preferably selected from palladium, nickel and cobalt. There is particular preference for palladium as Group VIII metal. The incorporation of the Group VIII metal in the catalyst compositions preferably takes place in the form of a salt of a carboxylic acid, in particular in the form of an acetate.

In the phosphorus bidentate ligands of the general formula $R_5R_6P\text{-}R\text{-}PR_7R_8$ which are eligible for use in the catalyst compositions, the groups $R_5$ to $R_8$ preferably each contain not more than 6 carbon atoms. There is also preference for phosphorus bidentate ligands in which the groups $R_5$ to $R_8$ are the same as one another. Examples of suitable groups $R_5$ to $R_8$ are the 2-propyl, the 2-butyl and the 2-pentyl groups. As regards the bridging group R in the phosphorus bidentate ligands, there is preference for bridging groups containing three atoms in the bridge, of which at least two are carbon atoms. Examples of suitable bridging groups R are the -CH$_2$-CH$_2$-CH$_2$- group, the -CH$_2$-C(CH$_3$)$_2$-CH$_2$- group and the -CH$_2$-Si(CH$_3$)$_2$-CH$_2$- group. Worth mentioning as very suitable phosphorus bidentate ligands are 1,3-bis(di 2-propylphosphino)propane and 1,3-bis(di 2-butylphosphino)propane. The phosphorus bidentate ligands are preferably used in the catalyst compositions in a quantity of 0.5-2 and in particular 0.75-1.5 mol per g.atom Group VIII metal.

In addition to a Group VIII metal and a phosphorus bidentate ligand, the catalyst compositions used in the polymer preparation according to the invention preferably also contain an anion of an acid with a pKa of less than 4 and in particular an anion of an acid with a pKa of less than 2. Examples of acids with a pKa of less than 2 are mineral acids such as perchloric acid, sulphonic acids such as para-toluenesulphonic acid and trifluoromethanesulphonic acid and halocarboxylic acids such as trifluoroacetic acid. There is preference for a halocarboxylic acid such as trifluoroacetic acid. The incorporation of the anion of an acid with a pKa of less than 4 in the catalyst composition can take place in the form of an acid and/or in the form of a salt. A nickel salt such as nickel perchlorate is very suitable as a salt. The anion is preferably present in the catalyst compositions in a quantity of 1-100 and in particular 2-50 mol per g.atom Group VIII metal.

In addition to a Group VIII metal, a phosphorus bidentate ligand and optionally an anion of an acid with a pKa of less than 4, the catalyst compositions which are eligible for use in the polymer preparation according to the invention preferably also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-quinones are preferred, and in particular 1,4-benzoquinone and 1,4-naphthoquinone. The organic oxidizing agent is preferably present in the catalyst compositions in a quantity of 5-5000 and in particular 10-1000 mol per g. atom Group VIII metal.

If the process according to the invention is employed for the preparation of polymers of carbon monoxide with ethene and/or propene and also with one or more other α-olefins, the latter α-olefins preferably contain fewer than 10 carbon atoms per molecule. The process according to the invention is particularly important for the preparation of polymers of carbon monoxide with ethene and/or propene.

The preparation of the polymers according to the invention is preferably carried out in the presence of a liquid diluent. Polar liquids are preferably used as diluents. These liquids can be protic or aprotic. An example of a suitable protic liquid is methanol. Examples of suitable aprotic liquids are acetone and tetrahydrofuran. If desired, the polymerization can also be carried out in the gas phase. The polymer preparation can be carried out either batchwise or continuously.

The quantity of catalyst composition used in the preparation of the polymers can vary within wide limits. Per mol olefinically unsaturated compound to be polymerized a quantity of catalyst composition is preferably used which contains $10^{-7}$-$10^{-3}$ and in particular $10^{-6}$-$10^{-4}$ g.atom Group VIII metal.

The preparation of the polymers is preferably carried out at a temperature of 20-150°C and a pressure of 2-150 bar and in particular at a temperature of 30-130°C and a pressure of 5-100 bar. The molar ratio of the olefinically unsaturated compounds relative to carbon monoxide is preferably 10:1-1:10 and in particular 5:1-1:5.

The invention will now be illustrated with reference to the following examples:

Example 1

A carbon monoxide/ethene copolymer was prepared as follows. Into a stirred autoclave with a volume of 250 ml a catalyst solution was introduced consisting of:

50 ml methanol,
0.1 mmol palladium acetate,
2 mmol trifluoroacetic acid, and
0.12 mmol 1,3-bis(di 2-propylphosphino)propane.

After forcing in 20 bar ethene and 30 bar carbon monoxide, the autoclave contents were brought to 70°C. After 5 hours the polymerization was terminated by cooling to room temperature and releasing the pressure. The polymer was filtered off, washed with methanol and dried. 12.5 g copolymer with a $\overline{M}_n$ of 2200 was obtained.

Example 2

A carbon monoxide/ethene copolymer was prepared in substantially the same way as in example 1, but with the difference that the catalyst solution contained 0.12 mmol 1,3-bis(di 2-butylphosphino) propane instead of 1,3-bis(di 2-propylphosphino)propane. 14 g copolymer with a $\overline{M}_n$ of 2000 was obtained.

Example 3 (comparative example)

A carbon monoxide/ethene copolymer was prepared in substantially the same way as in example 1, but with the difference that the catalyst solution contained 0.3 mmol trifluoromethanesulphonic acid instead of trifluoroacetic acid and 0.12 mmol 1,3-bis(di n-butylphosphino) propane instead of 1,3-bis(di 2-propylphosphino) propane. 6 g copolymer with a $\overline{M}_n$ >10,000 was obtained.

Example 4 (comparative example)

A carbon monoxide/ethene copolymer was prepared as follows. Into a stirred autoclave with a volume of 250 ml a catalyst solution was introduced consisting of:

40 ml tetrahydrofuran,
0.1 mmol palladium acetate,
0.3 mmol trifluoromethanesulphonic acid, and
0.2 mmol 1,3-bis(di n-butylphosphino)propane.

After successively forcing in 25 bar carbon monoxide, 25 bar hydrogen and 20 bar ethene, the autoclave contents were brought to 80°C. After 5 hours the polymerization was terminated by cooling the reaction mixture to room temperature and releasing the pressure. The polymer was filtered off, washed with methanol and dried. 10.5 g copolymer was obtained with a $\overline{M}_n$ 1400.

Of the examples 1-4, examples 1 and 2 are according to the invention. According to these examples, using catalyst compositions containing as phosphorus bidentate ligand a tetra(sec.alkyl)bisphosphine, polymers of carbon monoxide with ethene were prepared with a $\overline{M}_n$ <2500. Examples 3 and 4 fall outside the scope of the invention and have been included in the patent application for comparison. Example 3 shows that if the polymerization is carried out using a catalyst composition containing a tetra(n-alkyl)bisphosphine, polymers with a very high average molecular weight are obtained. Example 4 demonstrates that if the polymerization is carried out using a catalyst composition containing a tetra(n-alkyl)bisphosphine, the presence of hydrogen has a strong lowering effect on the average molecular weight of the prepared polymers.

It was established by NMR analysis that the polymers prepared according to examples 1-4 were built up of linear chains in which the units from carbon monoxide on the one hand and the units from ethene on the other hand occurred in an alternating arrangement.

**Claims**

1. Process for the preparation of polymers, characterized in that polymers of carbon monoxide with ethene and/or propene and optionally in addition with one or more other α-olefins are prepared by contacting the monomers in the absence of hydrogen with a catalyst composition containing a Group VIII metal and a phosphorus bidentate ligand of the general formula $R_5R_6P-R-PR_7R_8$ in which $R_5$ to $R_8$ represent identical or different monovalent aliphatic hydrocarbon groups in which the carbon atoms forming part of the groups $R_5$ to $R_8$ and being linked to phosphorus carry one hydrogen atom and in which R is a divalent organic bridging group containing at least two carbon atoms in the bridge connecting the two phosphorus atoms to each other.

2. Process according to claim 1, characterized in that the Group VIII metal is incorporated in the catalyst composition in the form of a salt of a carboxylic acid such as an acetate.

3. Process according to claim 1 or 2, characterized in that the groups $R_5$ to $R_8$ in the phosphorus bidentate ligand are identical and each contain not more than 6 carbon atoms.

4. Process according to one or more of claims 1-3, characterized in that the bridging group R in the phosphorus bidentate ligand contains three atoms in the bridge, of which at least two are carbon atoms.

5. Process according to claim 4, characterized in that the catalyst composition contains 1,3-bis(di 2-propylphosphino)propane or 1,3-bis(di 2-butylphosphino)propane as phosphorus bidentate ligand.

6. Process according to one or more of claims 1-5, characterized in that the catalyst composition additionally contains an anion of an acid with a pKa of less than 4 or less than 2.

7. Process according to one or more of claims 1-6, characterized in that the catalyst composition additionally contains a 1,4-quinone such as 1,4-benzoquinone or 1,4-naphthoquinone.

8. Process according to one or more of claims 1-7, characterized in that if it is applied for the preparation of polymers of carbon monoxide with ethene and/or propene and in addition with one or more other α-olefins, the latter α-olefins contain fewer than 10 carbon atoms.

9. Process according to one or more of claims 1-7, characterized in that it is applied for the preparation of polymers of carbon monoxide with ethene and/or propene.

10. Process according to one or more of claims 1-9, characterized in that it is carried out in the presence of a polar liquid diluent.

11. Process according to one or more of claims 1-10, characterized in that it is carried out at a temperature of 20-150°C, a pressure of 2-150 bar and a molar ratio of the olefinically unsaturated compounds relative to carbon monoxide of 10:1-1:10 and using a quantity of catalyst composition which contains $10^{-7}$-$10^{-3}$ g.atom Group VIII metal per mol olefinically unsaturated compound to be polymerized.

**Patentansprüche**

1. Verfahren zur Herstellung von Polymeren, dadurch gekennzeichnet, daß man Polymere aus Kohlenmonoxid und Ethen und/oder Propen sowie gegebenenfalls zusätzlich einem oder mehreren anderen α-Olefinen herstellt, indem man die Monomere in Abwesenheit von Wasserstoff mit einer Katalysatorzusammensetzung in Berührung bringt, die ein Metall der Gruppe VIII und einen zweizähnigen Phosphorliganden der allgemeinen Formel $R_5R_6P$-$R$-$PR_7R_8$ enthält, worin $R_5$ bis $R_8$ gleiche oder verschiedene einwertige aliphatische Kohlenwasserstoffgruppen bedeuten, wobei die einen Teil der Gruppen $R_5$ bis $R_8$ bildenden und an den Phosphor gebundenen Kohlenstoffatome ein Wasserstoffatom tragen, und R für eine zweiwertige organische Brückengruppe steht, die in der die beiden Phosphoratome miteinander verbindenden Brücke mindestens zwei Kohlenstoffatome enthält.

2. Verfahren nach Anspruch 1, dadurch gekennzeichnet, daß man das Metall der Gruppe VIII in Form eines Salzes einer Carbonsäure, wie z.B. eines Acetats, in die Katalysatorzusammensetzung einarbeitet.

3. Verfahren nach Anspruch 1 oder 2, dadurch gekennzeichnet, daß man zweizähnige Phosphorliganden einsetzt, deren Gruppen $R_5$ bis $R_8$ gleich sind und jeweils nicht mehr als 6 Kohlenstoffatome enthalten.

4. Verfahren nach einem oder mehreren der Ansprüche 1-3, dadurch gekennzeichnet, daß man zweizähnige Phosphorliganden einsetzt, deren Brückengruppe R drei Atome in der Brücke enthält, von denen mindestens zwei Kohlenstoffatome sind.

5. Verfahren nach Anspruch 4, dadurch gekennzeichnet, daß man eine Katalysatorzusammensetzung einsetzt, die als zweizähnien Phosphorliganden 1,3-Bis(di-2-propylphosphino)propan oder 1,3-Bis(di-2-butylphosphino)propan enthält.

6. Verfahren nach einem oder mehreren der Ansprüche 1-5, dadurch gekennzeichnet, daß man eine Katalysatorzusammensetzung einsetzt, die zusätzlich ein Anion einer Säure mit einem $pK_a$-Wert kleiner 4 oder kleiner 2 enthält.

7. Verfahren nach einem oder mehreren der Ansprüche 1-6, dadurch gekennzeichnet, daß man eine Katalysatorzusammensetzung einsetzt, die zusätzlich ein 1,4-Chinon, wie z.B. 1,4-Benzochinon oder 1,4-Naphthochinon, enthält.

8. Verfahren nach einem oder mehreren der Ansprüche 1-7, dadurch gekennzeichnet, daß man im Fall seiner Anwendung zur Herstellung von Polymeren aus Kohlenmonoxid und Ethen und/oder Propen sowie zusätzlich einem oder mehreren anderen α-Olefinen α-Olefine mit weniger als 10 Kohlenstoffatomen einsetzt.

9. Verfahren nach einem oder mehreren der Ansprüche 1-7, dadurch gekennzeichnet, daß man es zur Herstellung von Polymeren aus Kohlenmonoxid und Ethen und/oder Propen anwendet.

10. Verfahren nach einem oder mehreren der Ansprüche 1-9, dadurch gekennzeichnet, daß man es in Gegenwart eines polaren flüssigen Verdünnungsmittels durchführt.

11. Verfahren nach einem oder mehreren der Ansprüche 1-10, dadurch gekennzeichnet, daß man es bei einer Temperatur von 20-150°C, einem Druck von 2-150 bar, einem Molverhältnis der olefinisch ungesättigten Verbindungen zum Kohlenmonoxid von 10:1-1:10 und unter Verwendung einer Menge an Katalysatorzusammensetzung, die pro Mol zu polymerisierender olefinisch ungesättigter Verbindung $10^{-7}$-$10^{-3}$ Grammatom des Metalls der Gruppe VIII enthält, durchführt.

**Revendications**

1. Procédé de préparation de polymères, conformément auquel on prépare des polymères du monoxyde de carbone et de l'éthène et/ou du propène et éventuellement, en outre, d'une ou plusieurs autres α-oléfines, par la mise en contact des monomères, en l'absence d'hydrogène, avec une composition catalytique contenant un métal du groupe VIII et un ligand bidentate phosphoré de la formule générale $R_5R_6P$-$R$-$PR_7R_8$, dans laquelle les symboles $R_5$ à $R_8$ représentent des radicaux hydrocarbonés aliphatiques monovalents, identiques ou différents, dans lesquels les atomes de carbone faisant partie des groupes $R_5$ à $R_8$ et liés au phosphore, portent un atome d'hydrogène et dans lesquels R représente un groupe de pontage organique bivalent contenant au moins deux atomes de carbone dans le pont reliant mutuellement les atomes de phosphore.

2. Procédé suivant la revendication 1, caractérisé en ce que le métal du groupe VIII est incorporé à la composition catalytique, sous la forme d'une sel d'un acide carboxylique, comme un acétate.

3. Procédé suivant la revendication 1 ou 2, caractérisé en ce que les groupes $R_5$ à $R_8$ dans le ligand bidentate phosphoré sont identiques et ne contiennent chacun pas plus de 6 atomes de carbone.

4. Procédé suivant une ou plusieurs des revendications 1 à 3, caractérisé en ce que le groupe de pontage R dans le ligand bidentate phosphoré contient trois atomes dans le pont, dont au moins deux sont des atomes de carbone.

5. Procédé suivant la revendication 4, caractérisé en ce que la composition catalytique contient du 1,3-bis(di-2-propylphosphino)propane ou du 1,3-bis(di-2-butylphosphino)propane, à titre de ligand bidentate phosphoré.

6. Procédé suivant une ou plusieurs des revendications 1 à 5, caractérisé en ce que la composition catalytique contient, en outre, un anion d'un acide qui possède un pKa inférieur à 4 ou inférieur à 2.

7. Procédé suivant une ou plusieurs des revendications 1 à 6, caractérisé en ce que la composition catalytique contient, en outre, une 1,4-quinone, comme la 1,4-benzoquinone, ou la 1,4-naphtoquinone.

8. Procédé suivant une ou plusieurs des revendications 1 à 7, caractérisé en ce que, si on l'applique à la préparation de polymères du monoxyde de carbone et de l'éthène et/ou du propène et, en plus, une ou plusieurs autres $\alpha$-oléfines, ces dernières $\alpha$-oléfines contiennent moins de 10 atomes de carbone.

9. Procédé suivant une ou plusieurs des revendications 1 à 7, caractérisé en ce qu'on l'applique pour la préparation de polymères du monoxyde de carbone et de l'éthène et/ou du propène.

10. Procédé suivant une ou plusieurs des revendications 1 à 9, caractérisé en ce qu'on l'entreprend en présence d'un diluant liquide polaire.

11. Procédé suivant une ou plusieurs des revendications 1 à 10, caractérisé en ce qu'on l'entreprend à une température de 20 à 150°C, sous une pression de 2 à 150 bars et avec un rapport molaire des composés à insaturation oléfinique au monoxyde de carbone de 10:1 à 1:10 et on utilise une quantité de composition catalytique qui contient $10^{-7}$ à $10^{-3}$ atome-gramme de métal du groupe VIII, par mole de composé à insaturation oléfinique à polymériser.